# EUROPÄISCHE PATENTSCHRIFT

(11) **EP 2 694 798 B1**
(45) Veröffentlichungstag und Bekanntmachung des Hinweises auf die Patenterteilung: **11.12.2019**
(21) Anmeldenummer: 12704045.9
(22) Anmeldetag: 09.02.2012
(51) Int. Cl.: F02N 11/04, B60W 10/30, B60W 30/192, B60W 30/18, B60W 10/06, F02N 11/08

(54) **VERFAHREN UND VORRICHTUNG ZUM BETREIBEN EINES GENERATORS**
METHOD AND DEVICE FOR OPERATING A GENERATOR
PROCÉDÉ ET DISPOSITIF POUR FAIRE FONCTIONNER UNE GÉNÉRATRICE

(30) Priorität: 01.04.2011 DE 102011006641
(43) Veröffentlichungstag der Anmeldung: 12.02.2014
(73) Patentinhaber: Robert Bosch GmbH, 70442 Stuttgart (DE); SEG Automotive Germany GmbH, 70499 Stuttgart (DE)
(72) Erfinder: KOSS, Thomas, 72768 Reutlingen (DE); ENGBER, Arnold, 63768 Hoesbach (DE)
(74) Vertreter: Steinbauer, Florian
(86) Internationale Anmeldenummer: PCT/EP2012/052206
(87) Internationale Veröffentlichungsnummer: WO 2012/130511

(56) Entgegenhaltungen:
- US-A- 5 836 151
- US-A1- 2002 069 639
- US-B1- 7 165 523

## Beschreibung

Die Erfindung betrifft ein Verfahren und eine Vorrichtung zum Betreiben eines Generators für einen Verbrennungsmotor eines Fahrzeugs.

### Stand der Technik

Es ist bekannt, dass Fahrzeuge ein Start-Stopp-System aufweisen können. Ein solches Start-Stopp-System ist insbesondere ein in der Regel automatisch arbeitendes System zur Reduzierung eines Kraftstoffverbrauchs des Fahrzeugs. Hierbei stoppt das System den Verbrennungsmotor während einer Standphase des Fahrzeugs, beispielsweise während eines Ampelstopps. Ein Weiterfahrwunsch eines Fahrers wird detektiert und daraufhin der Verbrennungsmotor erneut gestartet. Üblicherweise werden während des Startvorgangs des Verbrennungsmotors eine Leistungsabgabe eines Generators und damit das auf den Verbrennungsmotor wirkende Antriebsmoment des Generators begrenzt.

Nachteilig an dieser Begrenzung, welche auch als Bedämpfung bezeichnet werden kann, ist aber, dass bei Zuschaltung elektrischer Verbraucher im Bordnetz während der Start-Phase des Fahrzeugs erhebliche Spannungseinbrüche im Bordnetz auftreten können.

Aus der Schrift US 5,836,151 A ist ein System bekannt, bei dem in einer Kaltstartphase eines Motors dessen Ansteuerstrom reduziert oder desaktiviert wird, so dass von dem Motor ein geringeres Drehmoment erzeugt wird. Eine Reduzierung oder Deaktivierung bei einem anderen Betriebszustand ist nicht vorgesehen.

### Offenbarung der Erfindung

Die der Erfindung zugrunde liegende Aufgabe kann daher darin gesehen werden, ein Verfahren und eine Vorrichtung zum Betreiben eines Generator für einen Verbrennungsmotor eines Fahrzeugs anzugeben, welche Spannungseinbrüche im Bordnetz des Fahrzeugs bei Zuschaltung von elektrischen Verbrauchern begrenzen oder verhindern.

Die Aufgabe wird gelöst mittels des jeweiligen Gegenstands der unabhängigen Ansprüche. Vorteilhafte Ausgestaltungen sind Gegenstand von jeweils abhängigen Unteransprüchen.

Nach einem Aspekt wird ein Verfahren zum Betreiben eines Generators für einen Verbrennungsmotor eines Fahrzeugs bereitgestellt. Hierbei kann das Fahrzeug in einem Anfahrtsbetriebszustand und/oder in einem Start-Stopp-Betriebszustand betrieben werden, wobei ein Drehmoment des Generators in dem Anfahrtsbetriebszustand begrenzt wird. Es wird ein Betriebszustand des Fahrzeugs detektiert und eine Begrenzung des Drehmoments des Generators deaktiviert, falls der detektierte Betriebszustand dem Start-Stopp-Betriebszustand entspricht.

Gemäß einem weiteren Aspekt wird eine Vorrichtung zum Betreiben eines Generators für einen Verbrennungsmotor eines Fahrzeugs mit einem Anfahrtsbetriebszustand und einem Start-Stopp-Betriebszustand bereitgestellt. Hierbei ist ein Drehmoment des Generators in dem Anfahrtsbetriebszustand begrenzt. Die Vorrichtung umfasst einen Detektor zum Detektieren eines Betriebszustandes des Fahrzeugs, wobei ferner eine Deaktivierungseinrichtung vorgesehen ist, die eingerichtet ist, eine Begrenzung des Drehmoments des Generators zu deaktivieren, falls der detektierte Betriebszustand dem Start-Stopp-Betriebszustand entspricht.

Es wird also in vorteilhafter Weise ermöglicht, dass in dem Start-Stopp-Betriebszustand, in welchem üblicherweise häufig Motorstarts auftreten, stets ein unbegrenztes Drehmoment des Generators zur Verfügung steht, so dass Spannungseinbrüche aufgrund von Zuschaltung elektrischer Verbraucher im Bordnetz des Fahrzeugs begrenzt bzw. bedämpft oder verhindert werden können. Häufige Motorstarts treten beispielsweise in Staus oder in Warteschlangen vor einer roten Ampel auf, wenn das Fahrzeug nur eine kurze Distanz fahren kann, bevor es wieder halten muss. Ein unbegrenztes Drehmoment im Sinne der vorliegenden Erfindung bedeutet insbesondere, dass der Generator seine maximale elektrische Leistung dem Bordnetz zur Verfügung stellen kann. Das vom Generator aufgenommene Moment kann auch als ein Generatormoment bezeichnet werden.

Der Anfahrtsbetriebszustand umfasst insbesondere ein Starten des Verbrennungsmotors und insbesondere ein Anfahren des Fahrzeugs. In dem Anfahrtsbetriebszustand ist Leistungsabgabe des Generator begrenzt wird, so dass das auf den Verbrennungsmotor wirkende Antriebsmoment des Generator begrenzt werden kann.

In einem Start-Stopp-Betriebszustand wird insbesondere der Verbrennungsmotor während einer Standphase des Fahrzeugs abgestellt bzw. deaktiviert oder ausgeschaltet. Bei Detektion eines Anfahrtswunsches des Fahrers wird der Verbrennungsmotor wieder angeschaltet. Beispielsweise kann eine Gaspedalstellung erfasst werden und abhängig von der erfassten Stellung der Verbrennungsmotor wieder gestartet werden. Beispielsweise kann auch eine Kupplungspedalstellung erfasst werden und abhängig von der erfassten Kupplungspedalstellung der Verbrennungsmotor wieder gestartet werden. Das heißt also, dass, wenn der Fahrer das Kupplungspedal und/oder das Gaspedal betätigt, der Verbrennungsmotor wieder gestartet wird.

Gemäß einer Ausführungsform umfasst das Detektieren des Betriebszustandes des Fahrzeugs ein Überwachen einer Kommunikation zwischen einem Verbrennungsmotorsteuergerät und einem Generatorregler. Hierbei werden insbesondere die zwischen dem Verbrennungsmotorsteuergerät und dem Generatorregler gesendeten Signale erfasst. Solche Signale sind insbesondere Steuersignale und/oder Diagnosesignale. Da in der Regel die Signale, welche von dem Verbrennungsmotorsteuergerät an den Generatorregler und umgekehrt während des Start-Stopp-Betriebszustandes gesendet werden, sich von Signalen, welche von dem Verbrennungsmotorsteuergerät an den Generatorregler und umgekehrt während eines Anfahrtsbetriebszustandes oder während eines Fahrbetriebszustandes gesendet werden, unterscheiden, kann so in vorteilhafter Weise besonders einfach erkannt werden, dass sich das Fahrzeug in dem Start-Stopp-Betriebszustand befindet. Der Generatorregler ist insbesondere eingerichtet, eine Leistungsabgabe des Generators und damit das vom Generator abgenommene Drehmoment zu regeln. Der Fahrbetriebszustand tritt insbesondere zeitlich nach dem Anfahrtsbetriebszustand auf, wenn das Fahrzeug für eine gewisse Zeit oder Distanz kontinuierlich fahren kann, ohne dass es beispielsweise aufgrund einer roten Ampel oder einem Stau wieder abbremsen und anhalten muss. Das Verbrennungsmotorsteuergerät ist insbesondere eingerichtet, den Verbrennungsmotor und den Generatorregler zu steuern, und kann insofern auch als ein übergeordnetes Steuergerät bzw. Motorsteuergerät bezeichnet werden.

Nach einer weiteren Ausführungsform ist das Deaktivieren der Begrenzung des Drehmoments des Generator abhängig von einem detektierten pulsweitenmodulierten Signal zum Steuern eines Betriebszustandes des Generatorreglers, welches das Verbrennungsmotorsteuergerät an den Generatorregler sendet. Da ein pulsweitenmoduliertes Signal in der Regel durch zwei Spannungsebenen (low und high-Pegel) gebildet wird, kann eine entsprechende Schaltung des Generatorreglers in einem verlustarmen Schaltbetrieb arbeiten. Der Begriff "pulsweitenmoduliert" kann auch mit PWM abgekürzt werden.

Die Pulsweitenmodulation (PWM) ist eine Modulationsart, bei der eine technische Größe, beispielsweise ein elektrischer Strom oder eine elektrische Spannung, zwischen zwei Werten wechselt. Dabei wird bei konstanter Frequenz das Tastverhältnis des Signals moduliert, also die Breite und nicht die Weite eines Impulses.

Nach einer weiteren Ausführungsform umfasst das Detektieren des Verbrennungszustandes des Fahrzeugs ein Detektieren eines Verbrennungsmotorbetriebszustandes. Wenn beispielsweise detektiert wird, dass der Verbrennungsmotor ausgeschaltet ist, so kann in der Regel ausgeschlossen werden, dass sich das Fahrzeug in dem Anfahrtsbetriebszustand befindet. Somit wird in vorteilhafter Weise eine weitere Information über einen Betriebszustand des Fahrzeugs bereitgestellt, welche bei der Entscheidung über die Deaktivierung der Begrenzung des Drehmoments des Generators herangezogen werden kann.

In einer anderen Ausführungsform umfasst das Deaktivieren der Begrenzung des Drehmoments des Generators ein Deaktivieren einer Load-Response-Funktion des Generatorreglers. Eine solche Load-Response-Funktion, welche auch als LRF abgekürzt werden kann, kann vorzugsweise in dem Generatorregler implementiert bzw. integriert sein. Die Load-Response-Funktion kann auch mittels einer separaten Schaltung bereitgestellt werden, welche insbesondere in dem Generatorregler integriert sein kann. Eine Load-Response-Funktion bewirkt insbesondere, dass durch eine begrenzte Steigerungsrate der Abgabe elektrischer Leistung des Generators über die Zeit ein Lauf- und/oder Abgasverhalten des Verbrennungsmotors unterstützt wird. Insbesondere bewirkt die Load-Response-Funktion, dass bei Zuschaltung elektrischer Verbraucher im Bordnetz des Fahrzeugs verhindert wird, dass das durch die Ausgangsleistungserhöhung des Generators auf den Verbrennungsmotor rückwirkende Bremsmoment ein Drehzahleinbruch oder ein Abwürgen des Verbrennungsmotors bewirkt. Ein Abwürgen des Verbrennungsmotors bewirkt insbesondere ein Abschalten des Verbrennungsmotors.
Eine solche Load-Response-Funktion kann insbesondere während des Startvorgangs des Verbrennungsmotors aktiviert werden. Während des Startvorgangs kann die Load-Response-Funktion auch als Load-Response-Start-Funktion (LRS-Funktion) bezeichnet werden. Während des Fahrbetriebs bzw. in einem Fahrbetriebszustand kann die Load-Response-Funktion ebenfalls aktiviert werden und kann während dieses Betriebszustandes als eine LRD-Funktion bezeichnet werden.

Gemäß einer weiteren Ausführungsform umfasst das Deaktivieren der Begrenzung des Drehmoments des Generators ein Anwenden eines Alpha-Sprungs AS_SS für den Startbetrieb.

Gemäß einer weiteren Ausführungsform umfasst das Deaktivieren der Begrenzung des Drehmoments des Generators ein Aktivieren einer Bordnetzstabilisierungseinrichtung. Eine solche Bordnetzstabilisierungseinrichtung stellt insbesondere eine Stabile-Bordnetz-Funktion (SBN-Funktion) zur Verfügung. Die Bordnetzstabilisierungseinrichtung ist insbesondere eingerichtet, Spannungseinbrüche in dem Bordnetz des Fahrzeugs zu kompensieren. Vorzugsweise wird ein Tastverhältnis des pulsweitenmodulierten Signals auf 100% gesetzt, um in vorteilhafter Weise den Spannungseinbruch kompensieren zu können.

Nach einer anderen Ausführungsform umfasst das Detektieren des Betriebszustandes des Fahrzeugs ein Detektieren eines Betriebszustandes des Generatorreglers. Ein solcher Betriebszustand kann beispielsweise ein Regelbetrieb, ein Stillstandstakten oder ein Startvorgang sein. Der Generatorregler kann sich auch in einem Standby-Modus oder einem aktiven Modus befinden. Da in der Regel der Generatorregler während des Start-Stopp-Betriebszustandes die Betriebszustände Regelbetrieb, Stillstandstakten und Startvorgang in dieser Reihenfolge durchläuft, kann so in vorteilhafter Weise erkannt werden, dass sich das Fahrzeug in dem Start-Stopp-Betriebszustand befindet, woraufhin dann die Begrenzung des Drehmoments des Generators deaktiviert wird.

Gemäß einer weiteren Ausführungsform wird die Begrenzung des Drehmoments des Generators zusätzlich abhängig von einer erfassten Temperatur des Generators deaktiviert. Da die Wahrscheinlichkeit, dass das Drehmoment des Generator zu einem Abwürgen des Verbrennungsmotors führt, insbesondere abhängig von der Temperatur in dem Generator ist, kann somit in vorteilhafter Weise ein solches Abwürgen verhindert werden. Insbesondere nimmt die Wahrscheinlichkeit bei höheren Temperaturen ab, wohingegen sie bei niedrigeren Temperaturen zunimmt. Insofern kann die Deaktivierung der Bedämpfung bzw. Begrenzung des Drehmoments des Generators vorzugsweise erst freigegeben werden, wenn der Generator ausreichend warm ist. Vorzugsweise kann hierfür auch eine Temperatur in dem Generatorregler ausgewertet werden. Erst wenn die Generatorreglertemperatur einen bestimmten Schwellwert überschreitet, wird vorzugsweise die Bedämpfung bzw. Begrenzung des Drehmoments des Generators deaktiviert.

Nach einer anderen Ausführungsform ist die Deaktivierungseinrichtung in dem Generatorregler integriert. Somit kann aufgrund der Integration eine besonders kompakte Bauform der erfindungsgemäßen Vorrichtung erreicht werden.

Nach einer anderen Ausführungsform ist der Detektor eingerichtet, eine Kommunikation zwischen dem Verbrennungsmotorsteuergerät und dem Generatorregler zu überwachen.

Nach einer anderen Ausführungsform weist der Detektor einen Temperatursensor zum Detektieren einer Generatortemperatur auf. Vorzugsweise ist die Deaktivierungseinrichtung ferner ausgebildet, abhängig von der detektierten Temperatur die Begrenzung des Drehmoments des Generators zu deaktivieren. Vorzugsweise können auch mehrere Temperatursensoren vorgesehen sein. Vorzugsweise kann der Temperatursensor bzw. die Temperatursensoren auch eingerichtet sein, eine Generatorreglertemperatur zu erfassen, wobei insbesondere die Deaktivierungseinrichtung dann ausgebildet ist, abhängig von dieser detektierten Temperatur die Begrenzung des Drehmoments des Generators zu deaktivieren. Nach einem Aspekt wird ein System bereitgestellt umfassend eine Vorrichtung zum Betreiben eines Generators für einen Verbrennungsmotor, ein Verbrennungsmotorsteuergerät und einen Generatorregler.

Die Erfindung wird im Folgenden anhand von bevorzugten Ausführungsbeispielen unter Bezugnahme auf Figuren näher erläutert. Hierbei zeigen
- Fig. 1: ein schematisches Ablaufdiagramm eines Verfahrens zum Betreiben eines Generators für einen Verbrennungsmotor eines Fahrzeugs,
- Fig. 2: eine Vorrichtung zum Betreiben eines Generators für einen Verbrennungsmotor eines Fahrzeugs,
- Fig. 3: die Vorrichtung aus Fig. 2 bei der Überwachung einer Kommunikation zwischen einem Verbrennungsmotorsteuergerät und einem Generatorregler und
- Fig. 4: ein Ablaufdiagramm eines weiteren Verfahrens zum Betreiben eines Generators für einen Verbrennungsmotor eines Fahrzeugs.

Im Folgenden werden für gleiche Merkmale gleiche Bezugszeichen verwendet.

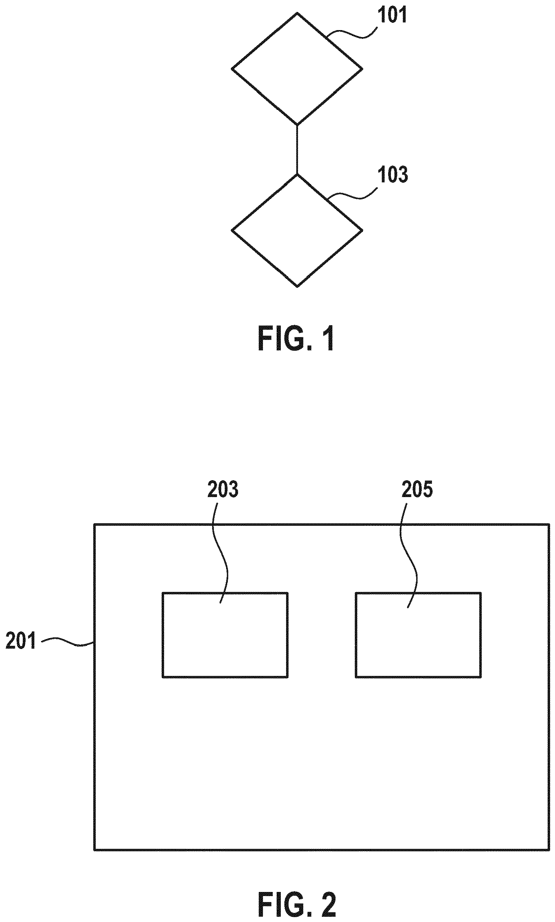

Fig. 1 zeigt ein Ablaufdiagramm einer Ausführungsform eines Verfahrens zum Betreiben eines Generators für einen Verbrennungsmotor eines Fahrzeugs. In einem Schritt 101 wird ein Betriebszustand des Fahrzeugs detektiert. In einem folgenden Schritt 103 wird eine Begrenzung des Drehmoments des Generators deaktiviert, falls der im Schritt 101 detektierte Betriebszustand dem Start-Stopp-Betriebszustand entspricht.

Fig. 2 zeigt eine Vorrichtung 201 zum Betreiben eines Generators (nicht gezeigt) für einen Verbrennungsmotor (nicht gezeigt) eines Fahrzeugs (nicht gezeigt). Das Fahrzeug weist einen Anfahrtsbetriebszustand und einen Start-Stopp-Betriebszustand auf, wobei ein Drehmoment des Generators in dem Anfahrtsbetriebszustand begrenzt ist. Die Vorrichtung 201 umfasst ferner einen Detektor 203 zum Detektieren eines Betriebszustandes des Fahrzeugs. Ferner umfasst die Vorrichtung 201 eine Deaktivierungseinrichtung 205, die eingerichtet ist, eine Begrenzung des Drehmoments des Generators zu deaktivieren, falls der detektierte Betriebszustand dem Start-Stopp-Betriebszustand entspricht.

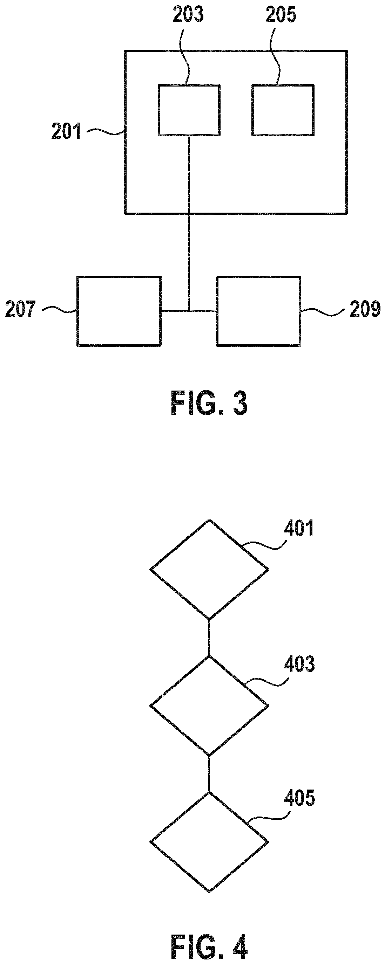

Fig. 3 zeigt schematisch die Vorrichtung 201 aus Fig. 2, wobei der Detektor 203 eine Kommunikation zwischen einem Verbrennungsmotorsteuergerät 207 und einem Generatorregler 209 überwacht. Beispielsweise kann das Verbrennungsmotorsteuergerät 207 ein pulsweitenmoduliertes Signal zum Steuern eines Betriebszustandes des Generatorreglers 209 an den Generatorregler 209 senden. Dieses pulsweitenmodulierte Signal wird vom Detektor 203 detektiert und abhängig von dem detektierten Signal wird dann die Begrenzung des Drehmoments des Generators deaktiviert.

Fig. 4 zeigt ein Ablaufdiagramm einer weiteren Ausführungsform eines Verfahrens zum Betreiben eines Generators für einen Verbrennungsmotor eines Fahrzeugs. In einem Schritt 401 wird eine Kommunikation zwischen einem Verbrennungsmotorsteuergerät und einem Generatorregler überwacht. In einem Schritt 403 wird eine Temperatur in dem Generator erfasst. In einem Schritt 405 wird abhängig von der Kommunikation zwischen dem Verbrennungsmotorsteuergerät und dem Generator, beispielsweise von den erfassten gesendeten Signalen, und der erfassten Generatortemperatur eine Begrenzung des Drehmoments des Generators deaktiviert.

Nach einer nicht gezeigten Ausführungsform wird eine Begrenzung des Drehmoments des Generators deaktiviert oder auch aktiviert, wenn der Generatorregler erkennt, dass sich das Fahrzeug im Start-Stopp-Betriebszustand befindet. Diese Erkennung ist insbesondere abhängig davon, wie das Verbrennungsmotorsteuergerät mit dem Generatorregler während des Start-Stopp-Betriebszustandes kommuniziert. Das Verbrennungsmotorsteuergerät kann allgemein den Generatorregler in einen Standby-Modus versetzen oder in einem aktiven Modus halten, was im Folgenden weiter erläutert wird.

### Der Generatorregler wird in den Standby-Modus versetzt:

Mit Einleiten der Stoppphase des Start-Stopp-Betriebszustandes wird der Generatorregler in den Standby-Modus versetzt. Um nun einen Start-Stopp-Betriebszustand erkennen zu können, muss das Motorsteuergerät den Generatorregler mittels Senden einer bestimmten PWM-Sollwertvorgabe aktivieren. Hierbei steht PWM für Pulsweitenmodulation. Das heißt, dass das Verbrennungsmotorsteuergerät ein pulsweitenmoduliertes Signal an den Generatorregler sendet.

### Der Generatorregler wird im aktiven Modus gehalten:

Während der Stoppphase des Start-Stopp-Betriebszustandes sendet das Verbrennungsmotorsteuergerät weiterhin eine gültige PWM-Sollwertvorgabe. Das heißt, dass das Verbrennungsmotorsteuergerät ein entsprechendes pulsweitenmoduliertes Signal an den Generatorregler sendet, so dass dieser im aktiven Modus verbleibt. Da aber während der Stoppphase der Verbrennungsmotor aus ist, erkennt der Generatorregler den Betriebszustand Stillstand und geht in den Betriebszustand Stillstandstakten über. Dies wird vom Generatorregler als Stoppphase im Start-Stopp-Betriebszustand erkannt und somit als Start-Stopp-Betriebszustand.

In einer weiteren nicht gezeigten Ausführungsform kann eine Bedämpfung bzw. Begrenzung des Drehmoments des Generators deaktiviert werden, indem eine LRS-Funktion deaktiviert wird. Die LRS-Funktion entspricht der Load-Response-Funktion während des Startvorgangs des Verbrennungsmotors. In diesem Fall wird insbesondere während des Startvorgangs die Änderungsrate des Tastverhältnises des pulsweitenmodulierten Signals nicht begrenzt und der Generator kann mit einer maximalen Leistung und mit einem maximalen Drehmoment einen Antriebsstrang belasten bzw. die maximale elektrische Leistung dem Bordnetz zur Verfügung stellen.

In einer weiteren nicht gezeigten Ausführform kann eine Bedämpfung bzw. Begrenzung des Drehmoments des Generators deaktiviert werden, indem die Höhe der sprungartigen Änderung des Tastverhältnisses des pulsweitenmodulierten Signals (sogenannter Alpha-Sprung) auf einen großen Wert (z.B. 60%) gesetzt wird. Hierbei ist die LRS-Funktion weiterhin aktiv. Somit wird bei Bedarf eine ausreichend hohe elektrische Leistung dem Bordnetz zur Verfügung gestellt.

In einer weiteren nicht gezeigten Ausführungsform kann die Bedämpfung bzw. Begrenzung des Drehmoments des Generators deaktiviert werden, indem eine Bordnetzstabilisierungseinrichtung während des Startvorgangs aktiviert wird. Üblicherweise ist eine solche Bordnetzstabilisierungseinrichtung während des Startvorgangs deaktiviert. Sie wird erst im Regelbetrieb, das heißt im normalen Fahrbetrieb des Fahrzeugs, aktiviert und greift bei großen Spannungseinbrüchen übergeordnet ein, indem sie das Tastverhältnis auf 100% setzt, um den Spannungseinbruch zu kompensieren. Hierbei ist vorzugsweise die LRS-Funktion weiterhin aktiv. Wird aber während des Startvorgangs eine große elektrische Last zugeschaltet, die zu einem Einbruch der Bordnetzspannung führt, greift die mittels der Bordnetzstabilisierungseinrichtung bereitgestellte SBN-Funktion ein und kompensiert diesen Einbruch. Der Vorteil des Eingriffs über die SBN-Funktion besteht insbesondere darin, dass nur bei Bedarf, beispielsweise einem Spannungseinbruch, der Antriebsstrang durch das Generatormoment bzw. das Drehmoment des Generators dynamisch belastet wird. Tritt kein Spannungseinbruch auf, wird das Drehmoment des Generator durch die LRS-Funktion bedämpft bzw. begrenzt.

Weiterhin kann in einer weiteren nicht gezeigten Ausführungsform die Deaktivierung der Bedämpfung des Generatormoments erst freigegeben werden, wenn der Generator warm ist. Bei einem kalten Generator kann das Generatormoment zum Abwürgen des Verbrennungsmotors führen. Insofern kann dadurch insofern in vorteilhafter Weise ein solches Abwürgen vermieden werden. Dies kann vorzugsweise erfolgen, indem eine Temperatur in dem Generator und/oder in dem Generatorregler erfasst und ausgewertet wird. Erst wenn die entsprechende Temperatur einen bestimmten Schwellwert überschreitet, wird die Bedämpfung bzw. Begrenzung des Generatormoments deaktiviert.

In einer weiteren nicht gezeigten Ausführungsform wird der Generatorregler während der Stoppphase des Start-Stopp-Betriebszustandes in einen Standby-Modus versetzt. Die LRS-Funktion wird insbesondere deaktiviert. Wird der Generatorregler über eine bestimmte PWM-Sollwertvorgabe (U_PWM) aktiviert, erkennt der Generatorregler den Start-Stopp-Betriebszustand. Überschreitet die Temperatur des Generatorreglers einen bestimmten Schwellwert, wird vorzugsweise die LRS-Funktion für den Startvorgang deaktiviert. Der Generatorregler regelt dann vorzugsweise auf einen vorbestimmten Standard-Sollwert, bis eine von U_PWM abweichende Vorgabe empfangen wird.

In einer weiteren nicht gezeigten Ausführungsform wird der Generatorregler während der Stoppphase des Start-Stopp-Betriebszustandes in einen Standby-Modus versetzt. Der Alpha-Sprung AS_SS wird insbesondere auf einen vorbestimmten hohen Wert gesetzt. Wird der Generatorregler über eine bestimmte PWM-Sollwertvorgabe (U_PWM) aktiviert, erkennt der Generatorregler den Start-Stopp-Betriebszustand. Überschreitet die Temperatur des Generatorreglers einen bestimmten Schwellwert, wird vorzugsweise der für den Startvorgang vorbestimmte Alpha-Sprung AS_SS angewandt. Der Generatorregler regelt dann vorzugsweise auf einen vorbestimmten Standard-Sollwert, bis eine von U_PWM abweichende Vorgabe empfangen wird. Die LRS Funktion ist hierbei aktiviert.

In einer weiteren nicht gezeigten Ausführungsform wird der Generatorregler während der Stoppphase in einen Standby-Modus versetzt und die stabile Bordnetzfunktion wird im Start aktiviert, das heißt, dass die Bordnetzstabilisierungseinrichtung während des Startvorgangs aktiviert wird. Wird der Regler über eine bestimmte PWM-Sollwertvorgabe U_PWM aktiviert, erkennt der Generatorregler den Start-Stopp-Betriebszustand. Überschreitet die Temperatur des Generatorreglers einen bestimmten Schwellwert, wird die SBN-Funktion für den Startvorgang aktiviert. Der Generatorregler regelt auf den vorbestimmten Standard-Sollwert, bis eine von U_PWM abweichende Vorgabe empfangen wird. Nach Erreichen des Regelbetriebs wird die SBN-Funktion für den Start wieder deaktiviert.

In noch einer anderen nicht gezeigten Ausführungsform wird der Generatorregler während der Stoppphase in einem aktiven Modus gehalten und die LRS-Funktion wird vorzugsweise deaktiviert. Durchläuft der Generatorregler die Betriebszustände Regelbetrieb, Stillstandstakten und Startvorgang in dieser Reihenfolge, erkennt der Generatorregler den Start-Stopp-Betriebszustand. Überschreitet die Temperatur des Generatorreglers einen bestimmten Schwellwert, wird die LRS-Funktion für den Startvorgang deaktiviert. Der Generatorregler regelt insbesondere auf die PWM-Sollwertvorgabe.

In einer anderen nicht gezeigten Ausführungsform wird der Generatorregler während der Stoppphase in einem aktiven Modus gehalten und der Alpha-Sprung AS_SS wird vorzugsweise angewandt. Durchläuft der Generatorregler die Betriebszustände Regelbetrieb, Stillstandstakten und Startvorgang in dieser Reihenfolge, erkennt der Generatorregler den Start-Stopp-Betriebszustand. Überschreitet die Temperatur des Generatorreglers einen bestimmten Schwellwert, wird AS_SS für den Startvorgang angewandt. Der Generatorregler regelt insbesondere auf die PWM-Sollwertvorgabe.

In noch einer anderen Ausführungsform wird der Generatorregler während der Stoppphase des Start-Stopp-Betriebszustandes in einem aktiven Modus gehalten und vorzugsweise wird die stabile Bordnetzfunktion (SBN-Funktion) im Start aktiviert. Durchläuft der Generatorregler insbesondere die Zustände Regelbetrieb, Stillstandstakten und Startvorgang in dieser Reihenfolge, erkennt der Generatorregler den Start-Stopp-Betriebszustand. Überschreitet die Temperatur des Generatorreglers einen bestimmten Schwellwert, wird die SBN-Funktion für den Startvorgang aktiviert. Der Generatorregler regelt insbesondere dann auf die PWM-Sollwertvorgabe. Nach Erreichen des Regelbetriebs wird die SBN-Funktion für den Start wieder vorzugsweise deaktiviert.

Zusammenfassend stellt die Erfindung ein Verfahren und eine Vorrichtung bereit, welche es insbesondere ermöglichen, dass in Abhängigkeit der Umgebungsbedingungen und insbesondere der PWM-Sollwertvorgaben eine Bedämpfung bzw. Begrenzung des Generatormoments deaktiviert wird. Somit steht auch während eines Startvorgangs die volle Leistung bzw. ein unbegrenztes Generatormoment bereit, so dass in vorteilhafter Weise mögliche Spannungseinbrüche im Bordnetz bedämpft werden können.

## Patentansprüche

1. Verfahren zum Betreiben eines Generator für einen Verbrennungsmotor eines Fahrzeugs mit einem Anfahrtsbetriebszustand und einem Start-Stopp-Betriebszustand, wobei ein Drehmoment des Generator in dem Anfahrtsbetriebszustand begrenzt wird, mit:
Detektieren (101) eines Betriebszustandes des Fahrzeugs; und
Deaktivieren (103) einer Begrenzung des Drehmoments des Generators,
**dadurch gekennzeichnet, dass**
die Deaktivierung (103) der Begrenzung des Drehmoments des Generators erfolgt, falls der detektierte Betriebszustand dem Start-Stopp-Betriebszustand entspricht.

2. Verfahren nach Anspruch 1, wobei das Detektieren (101) ein Überwachen (401) einer Kommunikation zwischen einem Verbrennungsmotorsteuergerät (207) und einem Generatorregler (209) umfasst.

3. Verfahren nach Anspruch 2, wobei das Deaktivieren (103) der Begrenzung des Drehmoments des Generators abhängig von einem detektierten pulsweitenmodulierten Signal zum Steuern eines Betriebszustandes des Generatorreglers (209) ist, welches das Verbrennungsmotorsteuergerät (207) an den Generatorregler (209) sendet.

4. Verfahren nach einem der vorherigen Ansprüche, wobei das Detektieren (101) des Betriebszustandes des Fahrzeugs ein Detektieren eines Verbrennungsmotorbetriebszustandes umfasst.

5. Verfahren nach einem der vorherigen Ansprüche, wobei das Deaktivieren (103) der Begrenzung des Drehmoments des Generators ein Deaktivieren einer Load-Response-Funktion des Verbrennungsmotorsteuergeräts (207) umfasst.

6. Verfahren nach einem der vorherigen Ansprüche, wobei das Deaktivieren (103) der Begrenzung des Drehmoments des Generators ein Anwenden eines Alpha-Sprungs AS_SS für den Startbetrieb umfasst.

7. Verfahren nach einem der vorherigen Ansprüche, wobei das Deaktivieren (103) der Begrenzung des Drehmoments des Generators ein Aktivieren einer Bordnetzstabilisierungseinrichtung umfasst.

8. Verfahren nach einem der vorherigen Ansprüche, wobei das Detektieren (101) des Betriebszustandes des Fahrzeugs ein Detektieren eines Betriebszustandes des Generatorreglers (209) umfasst.

9. Verfahren nach einem der vorherigen Ansprüche, wobei die Begrenzung des Drehmoments des Generators zusätzlich abhängig von einer erfassten Temperatur des Generators deaktiviert wird.

10. Vorrichtung (201) zum Betreiben eines Generator für einen Verbrennungsmotor eines Fahrzeugs mit einem Anfahrtsbetriebszustand und einem Start-Stopp-Betriebszustand, wobei ein Drehmoment des Generator in dem Anfahrtsbetriebszustand begrenzt ist, umfassend einen Detektor (203) zum Detektieren eines Betriebszustandes des Fahrzeugs, wobei eine Deaktivierungseinrichtung (205) vorgesehen ist, die eingerichtet ist, eine Begrenzung des Drehmoments des Generator zu deaktivieren,
**dadurch gekennzeichnet, dass**
die Begrenzung des Drehmoments des Generator deaktiviert wird, falls der detektierte Betriebszustand dem Start-Stopp-Betriebszustand entspricht.

11. Vorrichtung (201) nach Anspruch 9, wobei die Deaktivierungseinrichtung (205) in einem Generatorregler (209) integriert ist.

12. Vorrichtung (201) nach Anspruch 9 oder 10, wobei der Detektor (203) eingerichtet ist, eine Kommunikation zwischen einem Verbrennungsmotorsteuergerät (207) und dem Generatorregler (209) zu überwachen.

13. Vorrichtung (201) nach einem der Ansprüche 9 bis 11 wobei der Detektor (203) einen Temperatursensor zum Detektieren einer Generatortemperatur aufweist und wobei die Deaktivierungseinrichtung (205) ferner gebildet ist, abhängig von der detektierten Temperatur die Begrenzung des Drehmoments des Generators zu deaktivieren.

## Claims

1. Method for operating a generator for an internal combustion engine of a vehicle having a starting operating condition and a start-stop operating condition, wherein a generator torque is limited in the starting operating condition, comprising:
detecting (101) an operating condition of the vehicle; and
deactivating (103) a limitation of the generator torque,
**characterised in that**
the generator torque limitation is deactivated (103) if the detected operating condition corresponds to the start/stop operating condition.

2. Method according to claim 1, wherein detecting (101) comprises monitoring (401) a communication between an internal combustion engine controller (207) and a generator controller (209).

3. Method according to claim 2, wherein deactivating (103) the limitation of the generator torque is dependent on a detected pulse width modulated signal for controlling an operating state of the generator controller (209) which the internal combustion engine controller (207) sends to the generator controller (209).

4. Method according to any one of the preceding claims, wherein detecting (101) the operating condition of the vehicle comprises detecting an internal combustion engine operating condition.

5. Method according to any one of the preceding claims, wherein deactivating (103) the limitation of the generator torque comprises deactivating a load-response function of the internal combustion engine controller (207).

6. Method according to any one of the preceding claims, wherein deactivating (103) the limitation of the generator torque comprises applying an alpha-jump AS_SS for the starting operation.

7. Method according to any one of the preceding claims, wherein deactivating (103) the limitation of the generator torque comprises activating a vehicle electrical system stabilizer.

8. Method according to any one of the preceding claims, wherein detecting (101) the operating condition of the vehicle comprises detecting an operating condition of the generator controller (209).

9. Method according to any one of the preceding claims, wherein the limitation of the generator torque is additionally deactivated depending on a detected temperature of the generator.

10. Device (201) for operating a generator for an internal combustion engine of a vehicle having a starting operating condition and a start-stop operating condition, wherein a generator torque is limited in the starting operating condition, comprising a detector (203) for detecting an operating condition of the vehicle, wherein a deactivation means (205) is provided configured to deactivate a limitation of the generator torque,
**characterised in that**
the limitation of the generator torque is deactivated if the detected operating condition corresponds to the start/stop operating condition.

11. Device (201) according to claim 9, wherein the deactivating means (205) is integrated in a generator controller (209).

12. Device (201) according to claim 9 or 10, wherein the detector (203) is configured to monitor a communication between an internal combustion engine controller (207) and the generator controller (209).

13. Device (201) according to any one of claims 9 to 11, wherein the detector (203) comprises a temperature sensor for detecting a generator temperature, and wherein the deactivating means (205) is further configured to deactivate the limitation of the generator torque depending on the detected temperature.

## Revendications

1. Procédé pour faire fonctionner un générateur pour un moteur à combustion d'un véhicule avec un état de fonctionnement au démarrage et un état de fonctionnement de marche-arrêt, dans lequel un couple du générateur est limité dans l'état de fonctionnement au démarrage, comportant les étapes consistant à :
détecter (101) un état de fonctionnement du véhicule ; et
désactiver (103) une limitation du couple du générateur, **caractérisé en ce que**
la désactivation (103) de la limitation du couple du générateur a lieu si l'état de fonctionnement détecté correspond à l'état de fonctionnement de marche-arrêt.

2. Procédé selon la revendication 1, dans lequel la détection (101) comprend une surveillance (401) d'une communication entre un appareil de commande de moteur à combustion (207) et un régulateur de générateur (209).

3. Procédé selon la revendication 2, dans lequel la désactivation (103) de la limitation du couple du générateur est dépendante d'un signal à largeur d'impulsion modulée détecté pour commander un état de fonctionnement du régulateur de générateur (209) que l'appareil de commande de moteur à combustion (207) envoie au régulateur de générateur (209).

4. Procédé selon l'une des revendications précédentes, dans lequel la détection (101) de l'état de fonctionnement du véhicule comprend une détection d'un état de fonctionnement de moteur à combustion.

5. Procédé selon l'une des revendications précédentes, dans lequel la désactivation (103) de la limitation du couple du générateur comprend une désactivation d'une fonction de réponse de charge de l'appareil de commande de moteur à combustion (207).

6. Procédé selon l'une des revendications précédentes, dans lequel la désactivation (103) de la limitation du couple du générateur comprend une application d'un saut alpha AS_SS pour le mode de démarrage.

7. Procédé selon l'une des revendications précédentes, dans lequel la désactivation (103) de la limitation du couple du générateur comprend une activation d'un dispositif de stabilisation de réseau de bord.

8. Procédé selon l'une des revendications précédentes, dans lequel la détection (101) de l'état de fonctionnement du véhicule comprend une détection d'un état de fonctionnement du régulateur de générateur (209).

9. Procédé selon l'une des revendications précédentes, dans lequel la limitation du couple du générateur est de plus désactivée en fonction d'une température détectée du générateur.

10. Dispositif (201) pour faire fonctionner un générateur pour un moteur à combustion d'un véhicule avec un état de fonctionnement au démarrage et un état de fonctionnement de marche-arrêt, dans lequel un couple du générateur est limité dans un état de fonctionnement au démarrage, comprenant un détecteur (203) pour détecter un état de fonctionnement du véhicule, dans lequel est prévu un dispositif de désactivation (205) conçu pour désactiver une limitation du couple du générateur,
**caractérisé en ce que**
la limitation du couple du générateur est désactivée si l'état de fonctionnement détecté correspond à l'état de fonctionnement de marche-arrêt.

11. Dispositif (201) selon la revendication 9, dans lequel le dispositif de désactivation (205) est intégré dans un régulateur de générateur (209).

12. Dispositif (201) selon la revendication 9 ou 10,
dans lequel le détecteur (203) est conçu pour surveiller une communication entre un appareil de commande de moteur à combustion (207) et le régulateur de générateur (209).

13. Dispositif (201) selon l'une des revendications 9 à 11, dans lequel le détecteur (203) comporte un capteur de température pour détecter une température de générateur, et dans lequel le dispositif de désactivation (205) est en outre formé en fonction de la température détectée pour désactiver la limitation du couple du générateur.
